# EUROPEAN PATENT APPLICATION

(11) **EP 2 223 643 A2**
(43) Date of publication of application: **01.09.2010**
(21) Application number: 10250324.0
(22) Date of filing: 24.02.2010
(51) Int. Cl.: A47K 11/02

(54) **Commode**

(30) Priority: 25.02.2009 GB 0903200
(71) Applicant: Department of Health, London, SW1A 2NS (GB)
(72) Inventor: Wilson, Peter, Leicester Leicestershire LE4 5DF (GB); Winn, Brian, Leicester Leicestershire LE4 5DF (GB); Green, Mary, Leicester Leicestershire LE4 5DF (GB); Renfrew, Bruce James, Leicester Leicestershire LE4 5DF (GB); Phillips, Michael, Leicester Leicestershire LE4 5DF (GB); Williamson, James, Leicester Leicestershire LE4 5DF (GB); Poberezny, Ken, Leicester Leicestershire LE4 5DF (GB); Phillips, Shaun, Leicester Leicestershire LE4 5DF (GB)
(74) Representative: Hackett, Sean James

(57) **Abstract**

A commode is provided comprising a hinged seat 104 having a rim surrounded by a recess and an aperture 500 under said hinged seat leading to two rollers 402, 404. The aperture 500 is adapted to receive a pan forming cartridge containing a commode liner comprising length of flexible tubular polymer material. The rollers 402,404 have a heat sealing element thereon arranged such that, in use, rotation of the rollers draws the tubular polymer material through the rollers and creates at least one seal therein so as to form a pouch for containing a user's excrement. (Figure 10)

## Description

This invention relates to a commode, in particular to a commode with improved sanitation.

Commodes are used in a number of applications within the healthcare industry. However, as they do not immediately dispose of excrement in the way that a plumbed toilet does, there can be issues related to their sanitation.

The spread of such infections as clostridium difficile, the bacterial spores of which can become airborne during the passing of excrement is a concern within the healthcare industry. This problem is amplified by the fact that such infections often cause significant diarrhoea in infected people which can increase the potential for bacteria or bacterial spores being passed from becoming airborne.

It is an object of the present invention to provide a commode that has an improved sanitation.

According to a first aspect of the invention there is provided a commode comprising: a hinged seat having a rim surrounded by a recess; an aperture under said hinged seat leading to two rollers; wherein the aperture is adapted to receive a pan forming cartridge containing a commode liner comprising length of flexible tubular polymer material, and wherein the rollers have a heat sealing element thereon arranged such that rotation of the rollers draws the tubular polymer material through the rollers and creates at least one seal therein so as to form a pouch for containing a user's excrement.

Preferably the heat sealing element comprises two heat sealers. More preferably one of the rollers has a cutter thereon and, in use, rotation of the rollers draws the tubular polymer material through the rollers and creates two seals and a cut therebetween so that the pouch is an individual pouch.

In this manner a commode can be provided in which each user's excrement is contained and sealed. Furthermore, in use the entire pan of the commode is lined and the liner replenished each use to ensure that each user is provided with a clean commode.

Preferably the commode further comprises an extraction means having an inlet adjacent the top of the pan. The commode may comprise an extraction path between the inlet and the extraction means, the extraction path having a Hepa filter therein. Preferably the commode further comprises a source of ultraviolet radiation located so as to irradiate the Hepa filter.

The extraction of the air from in and around the pan ensures that any airborne bacteria or spores released during use are directed through a filter in which they are trapped and irradiated.

Preferably the commode further comprises a seat cover movable between an open and a closed position and wherein the inlet is located between the seat cover and the seat. By locating the inlet in this location, when the cover is closed after use, extraction can continue so as to extract any bacteria or bacteria spores that become airborne during the re-lining process.

Preferably the commode further comprises a cartridge for location under the seat within said aperture, the cartridge forming the pan and containing a commode liner comprising a length of flexible tubular polymer material.

Preferably the diameter of the rollers is greater than the length of commode liner between the rollers and the cartridge. In this manner a single rotation of the rollers ensures that the entire exposed area of the commode liner is replenished.

Preferably the rollers have at least one radial recess therein to allow excrement within the commode liner to pass the rollers as they rotate. Accordingly, as they are rotated drawing the tubular sheet 120 therethrough, excrement within the liner and above the rollers can pass by the rollers in eh regions in which the tubular sheet extends into the recesses.

Each roller may have a plurality of opposing circumferential strips of pliable material thereon such that when the rollers are rotated the opposing strips of pliable material trap the commode liner therebetween. This helps prevent damage to the commode liner and allows for compliance as any folds within the liner are drawn through the rollers.

The commode may further comprising a flush button thereon, the flush button being located in a position in which it is obscured by the seat cover when the seat cover is in its open position. In this manner the cover must be lowered prior to the replenishment of the liner occurring, thereby ensuring that any bacteria or bacteria released during the replenishment process are contained within the pan and can be extracted therefrom by the extraction means.

According to a seconds aspect of the invention there is provided a commode liner cartridge for use with the commode according to the first aspect of the invention, the cartridge comprising: a substantially hoop shaped container having an continuous opening around its upper edge, and a tubular sheet of flexible polymer film contained within the container and protruding through the continuous opening.

Preferably the tubular sheet of flexible polymer film is sealed at its protruding end.

The hoop shaped container may comprise a plurality of ribs thereon on its inner and upper faces so as to encourage pleats to form in the film as it passes thereover.

In a preferred arrangement the cartridge has a curved inner edge which, together with the liner sheet, forms a commode pan.

The commode liner cartridge may further comprise a feeder attached to the end of the commode liner and removably attached to the underside of the cartridge and by which the end of said commode liner can be fed into the rollers of a commode. Preferably there is a piece of electrically conductive material attached to said feeder for completing a circuit when installed in a commode.

Preferably the commode further comprises a collection chamber beneath the rollers for collecting the pouches.

Embodiments of the invention will now be described, by way of example only, with reference to the accompanying drawings in which:
Figure 1 shows a perspective image of a commode and a liner according to the invention with the hinged seat in a down position;
Figure 2 shows a perspective image of a commode a liner cartridge according to the invention with a seat cover in an up position;
Figure 3 shows a cross section through a commode according to the invention;
Figure 4 shows a cross section through a cartridge according to the invention;
Figure 5 shows a lower perspective view of a cartridge according to the invention;
Figure 6 shows a roller of the commode according to the invention;
Figure 7 shows a perspective view of a roller module of the invention;
Figure 8 shows a perspective view of a sealer roller of the roller module;
Figure 9 shows a cutter roller of the roller module;
Figure 10 shows the commode with the hinged seat in an up position; and
Figure 11 shows a cross section the commode shown in Figure 10.

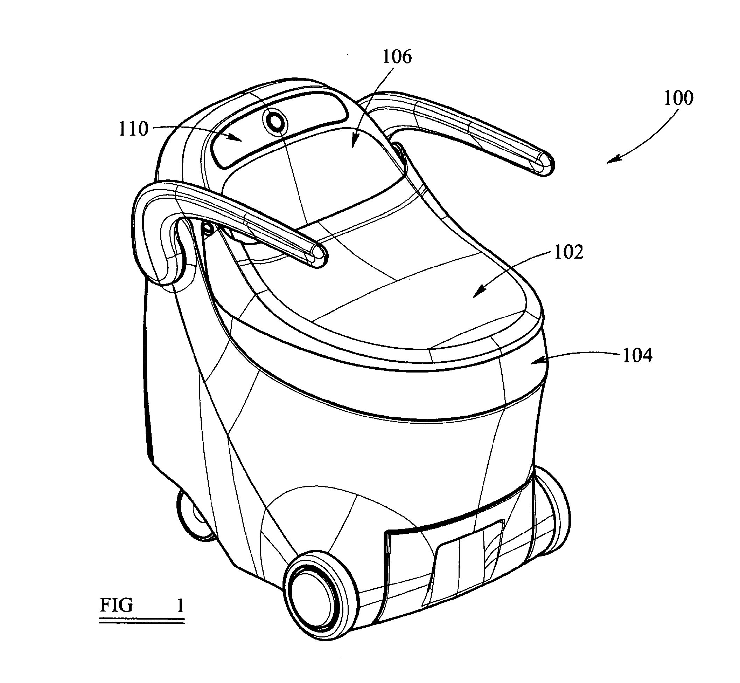

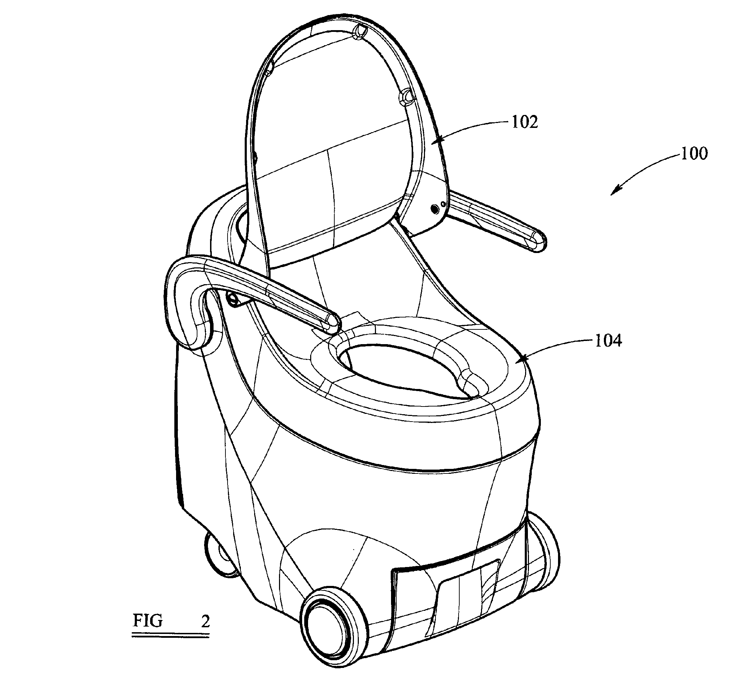

Referring to Figures 1 to 3 a commode 100 is shown comprising a seat cover 102 movable between a down position in which it covers a seat 104 and an up position in which the seat 104 is exposed. A commode back 106 rises above the level of the seat 104 and has a flush button 110 thereon that is covered when the seat cover 102 is in its up position, thereby ensuring that the seat cover 102 is lowered when the commode 100 is flushed. An extraction inlet 112 is located between the seat 104 and the cartridge 118 through which fumes or vapour occurring through use of the commode 100 may be extracted.

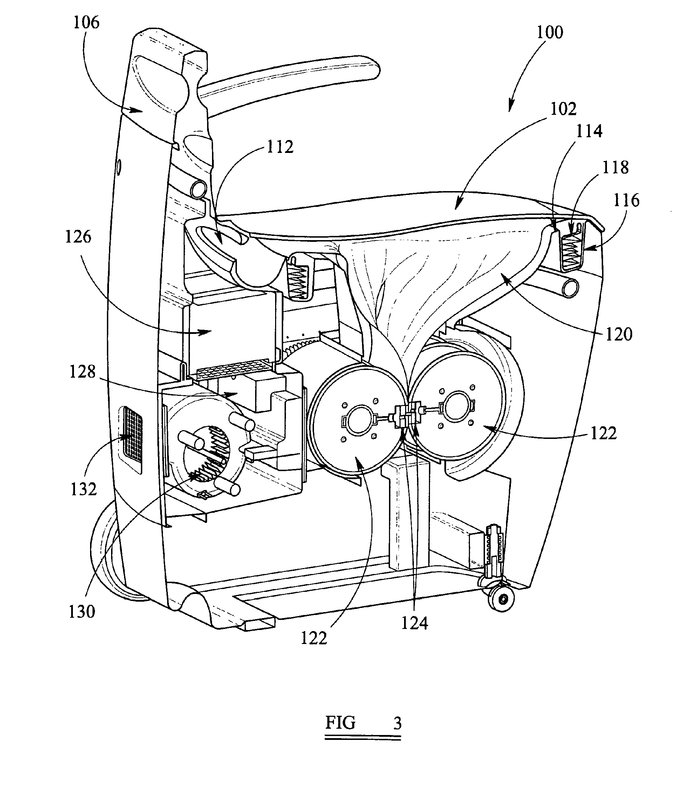

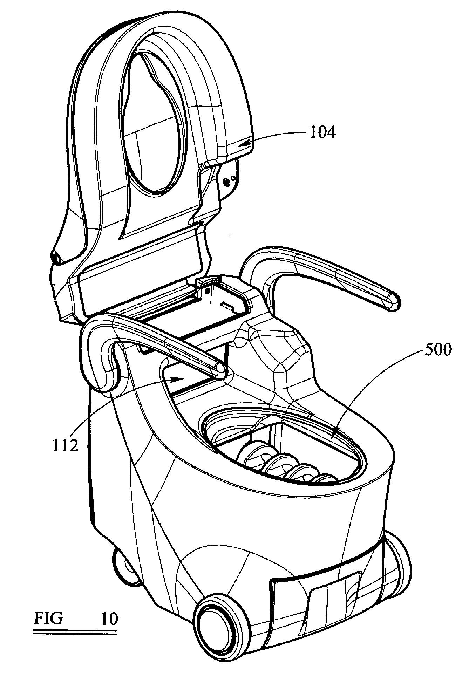

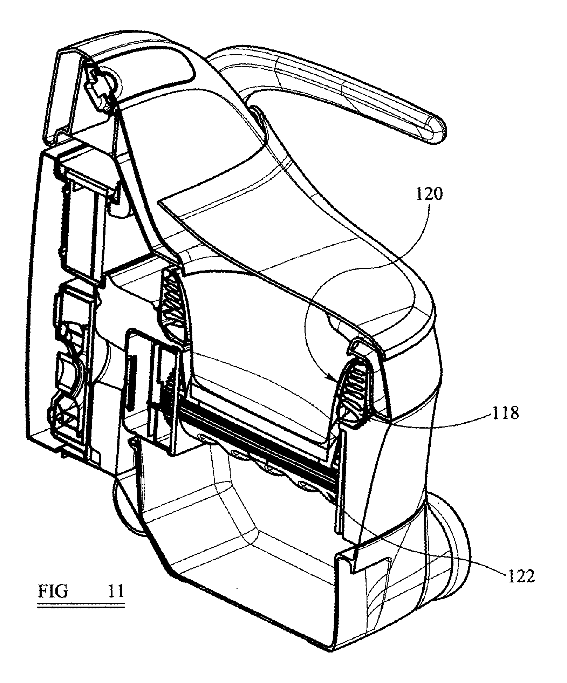

The liner cartridge 118 comprises a polymer casing containing a tubular sheet 120 of flexible thermoplastic material forming a sanitary commode liner. The tube sheet exits the cartridge and passes along the inner surface of the cartridge. The inner surface forms the pan of the commode 100. The end of the tubular sheet 120 passes between two roller elements 122 disposed within the commode. The roller elements 122 have heat seal elements 124 thereon which create a seal across the tubular sheet 120 when aligned therewith. The sealing elements 124 are of the type commonly used in the packaging industry, for example in form, fill, seal production lines, with the exception that they are mounted on rotatable rollers. The temperature, pressure and time with which the sealing elements are brought together will vary depending on the type of material and the thickness of the tubular sheet 120, the calculation of such parameters being known in the art. As shown in Figure 3 the rollers are orientated in a direction traverse the seat but alternatively they may be rotated through 90 degrees so that they are positioned front to back of the seat as shown in Figure 10 and 11. As shown in Figure 11 the hinged seat can be raised to enable a cartridge (not shown) to be received within an aperture 500 leading to the rollers.

The extraction inlet 112 leads to a hepa filter 126 through which any air entering the inlet 112 passes. An ultra-violet (UV) radiation source 128 emits UV radiation onto the Hepa filter so as to destroy any bacteria, or bacteria spores, trapped thereon as the air passes therethrough. Air is drawn in through the extractor inlet 112 and through the hepa filter 126 by fan 130. The filtered air then leaves the commode 100 via ventilation duct 132.

In use, the seat cover 102 is first raised such that the commode may be used. Lifting of the seat cover 102 activates the fan 130 which starts to draw in and filter air. The commode is then used and any gasses or moisture released by the user are extracted and safely filtered. Upon finishing, the user lowers the seat cover 102 to expose the flush button 110 and activates it. Upon activation of the flush button 102 two separate processes are started.

The first process is an automated turning off of the fan 130. This process is controlled by a timer which ensures that the fan 130 runs for a period of time after the seat cover 102 is lowered.

The second process is the changing of the sanitary commode liner. The roller elements 122 rotate towards one another to draw the tubular sheet 120 out of the cartridge 118 and downwards through the roller elements 122. The roller elements have recesses around their diameter such that and faeces and urine in the liner may also pass through the roller elements 122. The rollers rotate sufficiently that the section of tubular sheet 120 between the cartridge 118 and the roller elements 122 is replenished. Preferably this is achieved with one complete rotation of the rollers. The roller elements 122 have a number of radial recesses along their length such that when they are rotated drawing the tubular sheet 120 therethrough and excrement within the liner and above the rollers can pass by the rollers where the tubular sheet extends into the recesses.

Running along the length of the roller elements 122 on their exterior surface are a pair of heat sealing elements 124, one part of the pair being located on each roller element 122. When the pair of heat sealing elements 124 comes together a seal is formed across the tubular sheet 120 forming a pocket therebelow enclosing the excrement therein. The sealing elements 124, which are 0.5 kW resistance heaters, clamp together applying a pressure of 9 psi (0.6 bar) to the tubular sheet 120 and are heated for 1.7 seconds so as to impart heat into tubular sheet 120 causing it to fuse and form a seal across the tubular sheet separating the area below the rollers 122, which contains the excrement, from the area above the rollers. The power to the heat sealing elements is then removed, but the elements stay clamped for a minimum of a further five seconds to allow the material of the tubular sheet 120 to cool sufficiently that, when the clamping force is released, there is no significant stretching or distortion of the tubular sheet 120 in the region of the seal which could cause it to rupture. Usually the rollers will stay clamped, with no heat applied, until the next use. The commode is then ready for the next user.

The cartridge 118 contains sufficient length of tubular sheet to last a full day and may be sized depending on demand of use. Typically the tubular sheet 120 will be sufficient to last at least 10 uses. Then end of each tubular sheet has formed therein a seal such that, when first loaded into the commode, although it may be preferable, it is not necessary to form an initial heat seal at the bottom of the bag. Once a user's excrement has been enclosed within a pouch formed of the tubular sheet 120 the pouches are preferably not severed from one another, but are left linked in a continuous link. In this manner, if the seal created by the heat sealing elements 124 is not a complete seal, although there may be a slight migration of excrement from one pouch to an adjacent pouch, there is no risk of leakage into the interior of the commode.

In the manner described above a commode is provided that helps prevent the spread of bacterial infections that reside in the intestine and which may be spread through poor lavatory sanitation. By capturing and enclosing within a pouch each user's excrement immediately after use spread of bacteria is largely prevented. In addition, the liner system in combination with the extraction and filtration system increases the reduction of spread of such infections as any airborne bacteria released, for example through flatulence, are immediately extracted and passed through hepa filters wherein they become entrapped and destroyed by UV radiation. This commode is especially designed for controlling the spread of infections such as clostridium difficile.

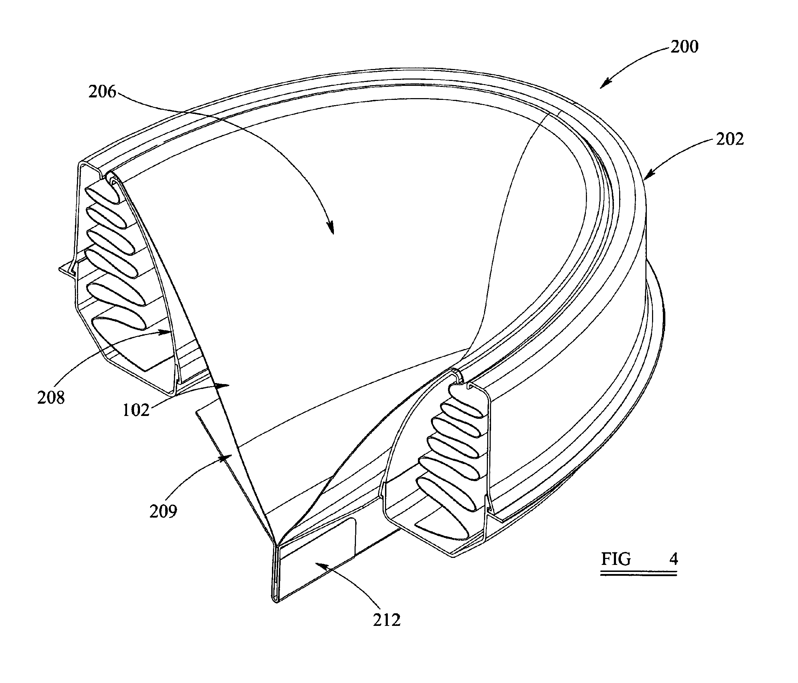

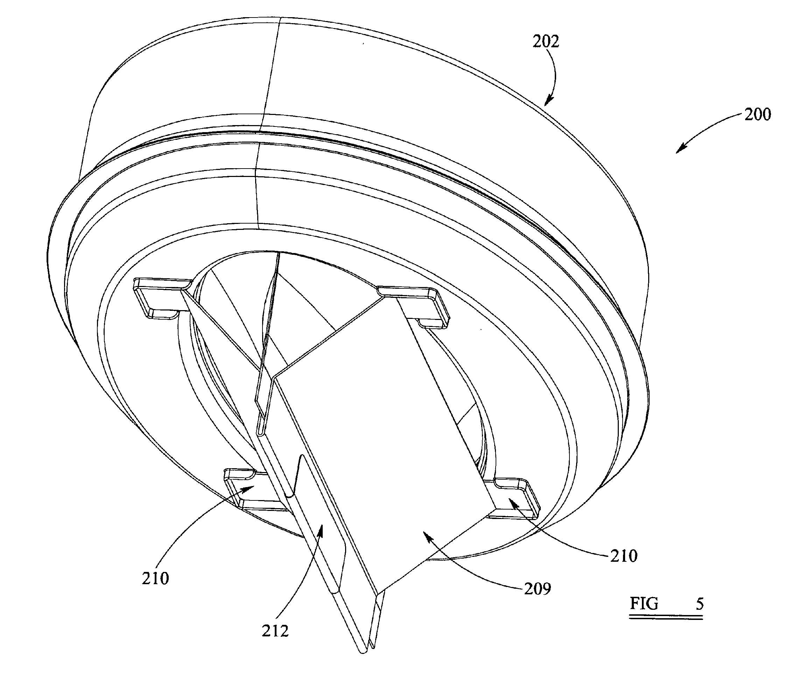

Referring to Figures 4 and 5 the cartridge 200 is an elliptical shaped component 202 with hole in the middle. It has a mostly square section in which a plastic tube 120 is packed, and which extends out of a slot 204 before passing through the central hole 206. The sides of the central hole 208 are smooth and are angled to form the commode pan. The approach of using the cartridge helps in two ways, firstly by giving greater access to the roller module for cleaning when the cartridge is removed, and also means the commode pan does not require cleaning as the cartridge is disposed into clinical waste once empty.

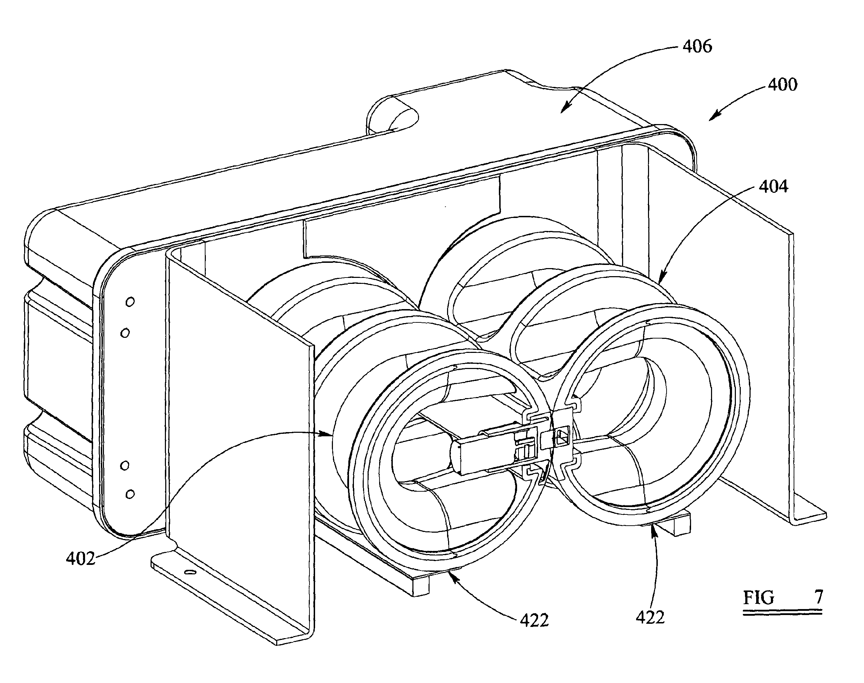

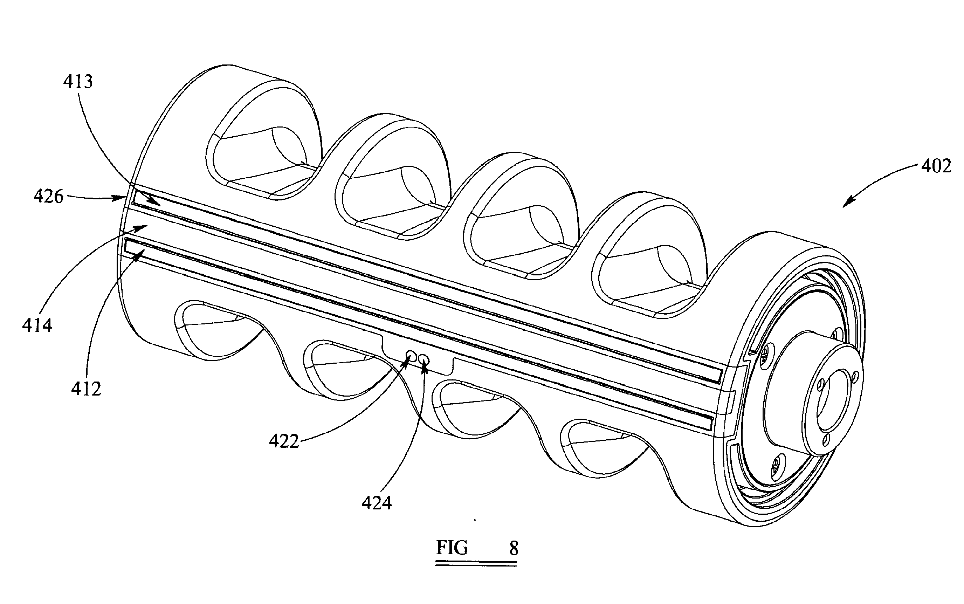

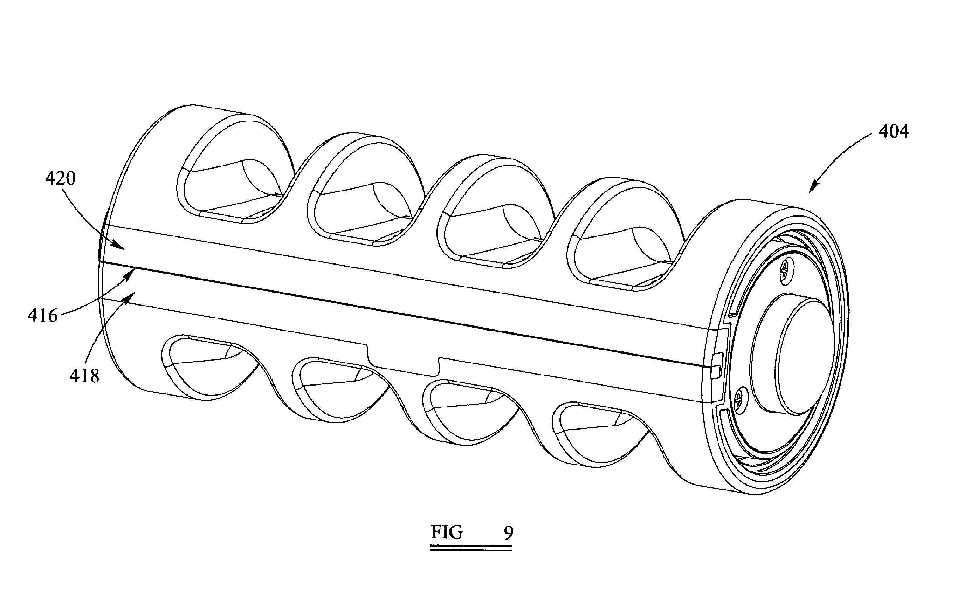

The cartridge optionally has a cardboard section 208 on the underside. This cardboard section is secured to the end of the plastic tube 120, and also secured with a low tack adhesive on four tabs 210 to the cartridge 200. There is an aluminium foil section 212 attached to the cardboard section 208 such that when the cartridge 200 is loaded into the commode the cardboard section 208 locates between the two rollers of the roller module (see Figures 7 to 9) and the aluminium foil 212 makes contact with two bag load contacts (222, 224 Figure 8) on the heat sealer. This then communicates to a commode control system (not shown) that a new cartridge is loaded.

As the rollers start to turn they grip onto the bottom edge of the cardboard section 208 and draw it though the rollers. As it is drawn though, the tabs 210 are pulled away from the cartridge, and the rollers turn through a full 360 degrees to complete the loading cycle.

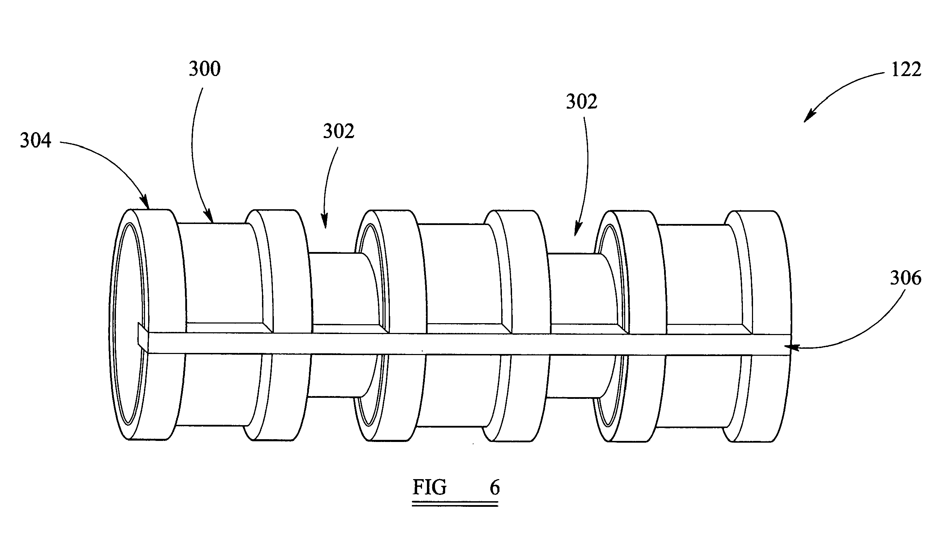

Referring to Figure 6 a roller 122 of the commode is shown comprising a roller element 300, having a number of recesses 302 therein. The roller element 302 has a number of strips of resilient neoprene rubber 304 thereon to enable the rollers 122, in use, to grab the tubular sheet without damaging the material thereof. The element has a heat sealing element 306 running along its length which is used as described above. The roller element 300 may have actuation means there which extend the heat sealing element 306 from the roller element 300, the actuator being controllable so as to exert a predetermined pressure on the tubular sheet during use. Alternatively the element 306 may be manually adjustable and the pressure applied on the tubular sheet is a function of the adjustment and the separation of the two rollers.

Referring to Figures 7 to 9 an alternative roller arrangement is shown comprising a roller 400 having two rollers 402, 404. The roller module 400 is the part of the commode 100 that controls the drawing through of the plastic tubing, and then the sealing and cutting of it. The roller module is a self-contained unit that can be removed from the commode and be operated separately. The electronics, transformers, and control systems for the entire commode are located at the back of the roller module in a splash proof area 406. This prevents any soiling of these components by either human waste or cleaning fluids, and allows the rest of the roller module to be cleaned using appropriate fluids.

There are two rollers 402, 404 in the roller module, supported at both ends by the roller module frame, which is a four sided aluminium box with an open top and an open bottom to allow easy access for cleaning. The two rollers are identical apart from that one 402 has a heat sealer unit 408, and the other 404 there is a heat cutter unit 410.

The rollers have a rigid plastic inner core with an over moulded thermoplastic elastomer (TPE). The over moulding allows the whole surface of the roller to be covered which leaves no dirt traps and is easy to clean. The thickness of the TPE is greater around the five disc like sections along its length to allow for more compliance in these regions when the two rollers are working against each other.

The heat sealer roller 402 shows the heat sealer holder 426, (made from a high heat resistant plastic (PBT)) with two heat sealer strips 412, 413 and a silicon pad 414 between them. The two heat sealer strips 412, 413 are covered with an adhesive backed sheet of Teflon (PTFE) to prevent the polymer tube sticking to the heater strip 412 after it is heated. The heat sealer strips 412, 413 sit slightly proud of the diameter of the roller in order to create a greater pressure across the surface of the heat sealer strips 412 when in contact with the other roller 404.

The heat sealer roller 402 has two bag load contacts 422, 424 in the heat sealer holder 426 so that when a new cartridge is put into the system the aluminium foil section on the cartridge touches these contacts and completes the circuit to tell the control system that a new cartridge is in place.

The heat cutter roller 404 shows the heat cutter holder, (made from a high heat resistant plastic (PBT)) with a heat cutter strip 416 held edge on, and two silicon pads 418, 420 either side of it. The heat cutter strip 416 is covered with an adhesive backed sheet of Teflon (PTFE) to prevent the polymer tube sticking to the heat cutter strip 416 after it is heated. The heat cutter strip 416 sits slightly proud of the diameter of the roller in order to create a greater pressure across the surface of the heat cutter strip 416 when in contact with the other roller.

The two rollers are geared together, and their rotational position is controlled by an optical sensor and an indexing wheel attached to one of the gears.

When flushed the two rollers 402, 404 rotate and draw through the faeces, urine and toilet paper contained within the plastic tube until the first heat sealer strip 412 is in contact with the silicon pad 418 on the heat cutter roller. At this point the rollers 402, 404 stop and the first heat sealer strip 412 is activated for a period of time long enough to melt the plastic tube and, along with the pressure of the heater strip on the silicon pad, to create a water tight seal. The rollers 402, 404 pause for a period of time to allow the molten plastic tube to harden again, before rotating again. This time the rollers stop when the heat cutter strip 416 is in contact with the silicon pad 414 on the heat sealer roller 402. Then the heater cutter strip 414 is activated for a period of time long enough to melt the plastic tube so as, along with the pressure of the heater strip 416 on the silicon pad 414, to create cut. There is no pause after the cutter process in order that the two halves of the cut bag do not reattach. The rollers then rotate again until the second heat sealer 413 is in contact with the silicon pad 420 on the heat cutter roller 404. At this point the rollers stop and the second heat sealer 413 is activated for a period of time long enough to melt the plastic tube so as, along with the pressure of the second heat sealer 413 on the silicon pad 420, to create a water tight seal. The rollers pause for a period of time to allow the molten plastic tube to harden again.

The faeces, urine and toilet paper contained within the plastic tube is now sealed into a single pouch that is located in the drawer at bottom of the commode.

The flushing process can then be repeated. In order that the plastic tube does not get stuck on the heat sealer and pulled around the roller, there is a bag release blade 422 located at the bottom of the roller which is a compliant plastic strip that scrapes along the rollers and releases the plastic tube from the heat sealer.

## Claims

1. A commode comprising:
a hinged seat having a rim surrounded by a recess;
an aperture under said hinged seat leading to two rollers;
wherein the aperture is adapted to receive a pan forming cartridge containing a commode liner comprising length of flexible tubular polymer material, and wherein the rollers have a heat sealing element thereon arranged such that, in use, rotation of the rollers draws the tubular polymer material through the rollers and creates at least one seal therein so as to form a pouch for containing a user's excrement.

2. A commode according to claim 1 wherein the heat sealing element comprises two heat sealers and wherein one of the rollers has a cutter thereon and, in use, rotation of the rollers draws the tubular polymer material through the rollers and creates two seals and a cut therebetween so that the pouch is an individual pouch.

3. A commode according to any one of claims 1 or 2 further comprising an extraction means having an inlet adjacent the aperture.

4. A commode according to claim 3 further comprising an extraction path between the inlet and the extraction means, the extraction path having a Hepa filter therein.

5. A commode according to claim 5 further comprising a source of ultraviolet radiation located so as to irradiate the Hepa filter.

6. A commode according to any one of claims 3 to 5 further comprising a seat cover movable between an open position and a closed position and:
wherein the inlet is located between the seat cover and the seat and/or
wherein a flush button is located in a position in which it is obscured by the seat cover when the seat cover is in its open position.

7. A commode according to any previous claim further comprising a cartridge for location under the seat within said aperture, the cartridge forming the pan and containing a commode liner comprising a length of flexible tubular polymer material.

8. A commode according to claim 7 wherein the diameter of the rollers is greater than the length of commode liner between the rollers and the cartridge.

9. A commode according to any previous claim wherein the rollers have at least one radial recess therein to allow excrement within the commode liner to pass the rollers as they rotate.

10. A commode according to any previous claim wherein each roller has a pliable material thereon such that when the rollers are rotated the pliable material on opposing faces of the two rollers trap the commode liner therebetween.

11. I A commode according to any previous claim further comprising a collection chamber beneath the rollers for collecting the pouches.

12. A commode liner cartridge for use with the commode according to claim 1, the cartridge comprising:
a substantially hoop shaped container having an continuous opening around its upper edge, and a tubular sheet of flexible polymer film contained within the container and protruding through the continuous opening.

13. A commode liner cartridge according to claim 12 wherein the tubular sheet of flexible polymer film is sealed at its protruding end

14. A commode liner cartridge according to claim 13 wherein the cartridge contains a curved inner edge which, together with the liner sheet, forms a commode pan.

15. A commode liner cartridge according to claim 12 or 13 further comprising a feeder attached to the end of the commode liner and removably attached to the underside of the cartridge and by which the end of said commode liner can be fed into the rollers of a commode, said feeder having a piece of electrically conductive material attached thereto for completing a circuit when installed in a commode.
